# EUROPEAN PATENT APPLICATION

(11) **EP 4 586 421 A1**
(43) Date of publication of application: **16.07.2025**
(21) Application number: 24213552.3
(22) Date of filing: 18.11.2024
(51) Int. Cl.: H02B 1/00

(54) **HIGH VOLTAGE BOX**

(30) Priority: 27.12.2023 CN 202323591944 U
(71) Applicant: Eve Energy Storage Co., Ltd., Wuhan, Hubei 430000 (CN)
(72) Inventor: HUANG, Mingxiang, Wuhan Hubei 430000 (CN); SUN, Hui, Wuhan Hubei 430000 (CN)
(74) Representative: Herrero & Asociados, S.L.

(57) **Abstract**

A high voltage box includes: a box (10), a cover plate (20), and electrical elements received in a receiving space inside the box. A top of the box defines an opening, and the cover plate covers the opening of the box. The box includes a first side panel (101) and a second side panel (102) opposite to the first side panel; the receiving space is defined between the first side panel and the second side panel; the electrical elements include a battery management system (302), a positive-electrode fuse (305) arranged on a positive-electrode circuit and/or a negative-electrode fuse (307) arranged on a negative-electrode circuit. The battery management system is located on a side of the receiving space near the first side panel; the positive-electrode fuse and/or the negative-electrode fuse is located on another side of the receiving space near the second side panel.

## Description

### TECHNICAL FIELD

The present disclosure relates to the field of electric energy, and in particular to a high voltage box.

### BACKGROUND

A high voltage box is an important component of an energy storage battery system, and various electronic elements are arranged inside the high voltage box, such as a battery management system (BMS), a relay, a fuse, a power module, and so on. For the high voltage box in the art, the electronic elements are arranged disorderly inside the high voltage box. Especially, a high-power heat generating element, such as the fuse, may be disposed near the BMS, such that the BMS may receive electromagnetic interference. In addition, the high-power heat generating element may generate a large amount of heat, easily resulting in high temperatures around the BMS, such that elements in the BMS may be aged, burnt or failed.

### SUMMARY OF THE DISCLOSURE

In order to solve the above technical problem, the present disclosure provides a high voltage box, in which the battery management system and the fuse are respectively arranged on two sides of the receiving space, such that the fuse is disposed away from the battery management system. In this way, the electromagnetic interference, caused by the fuse, on the battery management system is reduced, and an impact, caused by heat generated by the fuse, on the battery management system is reduced.

In a first aspect, the present disclosure provides a high voltage box, including: a box, a cover plate, and electrical elements received in a receiving space inside the box. A top of the box defines an opening, and the cover plate covers the opening of the box.

The box includes a first side panel and a second side panel opposite to the first side panel; the receiving space is defined between the first side panel and the second side panel; the electrical elements comprise a battery management system, a positive-electrode fuse arranged on a positive-electrode circuit and/or a negative-electrode fuse arranged on a negative-electrode circuit. The battery management system is located on a side of the receiving space near the first side panel; the positive-electrode fuse and/or the negative-electrode fuse is located on another side of the receiving space near the second side panel.

In some embodiments, a distance between the battery management system and the positive-electrode fuse is in a range of 200mm-280mm; and/or a distance between the battery management system and the negative-electrode fuse is in a range of 200mm-280mm.

In some embodiments, the electrical elements include both the positive-electrode fuse and the negative-electrode fuse. The box further includes a third side panel, a fourth side panel, and a bottom plate; the first side panel, the third side panel, the second side panel, and the fourth side panel are arranged in sequence and are connected to each other from end to end; each of the first side panel, the third side panel, the second side panel, and the fourth side panel is connected to a periphery of the bottom plate to cooperatively define the receiving space.

A side of the third side panel near the first side panel is arranged with a positive-electrode input interface and a negative-electrode input interface. The electrical elements further include an AC/DC power module, an equalization relay, a pre-charge resistor, a disconnector switch, a positive-electrode relay, a negative-electrode relay, and a shunt. The positive-electrode input interface, the disconnector switch, the positive-electrode relay, the positive-electrode fuse, and the positive-electrode output interface are connected to each other in sequence to form the positive-electrode circuit. The negative-electrode input interface, the disconnector switch, the negative-electrode relay, the negative-electrode fuse, the shunt, and the negative-electrode output interface are connected to each other in sequence to form the negative-electrode circuit. The equalization relay and the pre-charge resistor are connected to each other in series to form an equalization branch circuit, the equalization branch circuit is connected in parallel with the positive-electrode relay; the battery management system is connected to the AC/DC power supply module, the positive-electrode circuit, and the negative-electrode circuit.

In some embodiments, the box is a square box. The battery management system is disposed at a corner between the first side panel and the fourth side panel. The AC/DC power supply module is disposed between the fourth side panel and the battery management system. The positive-electrode fuse and the positive-electrode output interface are located along a same straight line; and the negative-electrode fuse and the negative-electrode output interface are located along a same straight line.

The first side panel, the fourth side panel, and the second side panel are integrally molded as a bent one-piece structure; the third side panel is welded to the bent one-piece structure; and a seal ring is disposed between the cover plate and the box.

In some embodiments, the electrical elements further include a first temperature sensor and a second temperature sensor; the first temperature sensor is disposed adjacent to the positive-electrode fuse; and the second temperature sensor is disposed adjacent to the negative-electrode fuse.

In some embodiments, a distance between the first temperature sensor and the positive-electrode fuse is in a range of 18mm-22mm; and a distance between the second temperature sensor and the negative-electrode fuse is in a range of 18mm-22mm.

In some embodiments, a copper plate having a first cross-sectional area is arranged for each of: connection between the positive-electrode relay and the positive-electrode fuse; connection between the positive-electrode fuse and the positive-electrode output interface; connection between the negative-electrode relay and the negative-electrode fuse; and connection between the negative-electrode fuse and the shunt; and the first cross-sectional area is in a range of 2.5*40mm²-3.5*45mm².

In some embodiments, a copper plate between the positive-electrode relay and the positive-electrode fuse is arranged with a heat dissipation sheet; and a copper plate between the negative-electrode relay and the negative-electrode fuse is arranged with another heat dissipation sheet.

In some embodiments, the box is further arranged with a fan, an air outlet surface of the fan faces at least one of: the heat dissipation sheet and the another heat dissipation sheet, arranged on the respective copper plate.

In some embodiments, a connecting harness connects the battery management system to the AC/DC power supply module, the positive-electrode circuit, and the negative-electrode circuit; and the connecting harness includes a high voltage wiring harness and a low voltage wiring harness; the high voltage wiring harness and the low voltage wiring harness are independent of each other; and an insulating layer is arranged to wrap around an outer surface of the high voltage wiring harness.

In some embodiments, the third side panel is further arranged with an auxiliary power supply interface, a communication expansion interface, a slave-control power supply communication interface, a master battery management unit communication interface, a slave battery management unit communication interface, a power indicator lamp, a fault indicator lamp, a lift handle, and a switch handle, wherein the switch handle is connected to the disconnector switch.

According to the present disclosure, a high voltage box is provided and includes a box having an opening at the top, a cover plate covering the opening of the box, and an electrical member received in a receiving space in the box. The box includes a first side panel and a second side panel opposite to the first side panel. The receiving space is located between the first side panel and the second side panel. The electrical member includes a battery management system, a positive-electrode fuse arranged on a positive-electrode circuit, and a negative-electrode fuse on a negative-electrode circuit. The battery management system is located on a side of the receiving space near the first side panel. The positive-electrode fuse and the negative-electrode fuse are located on a side of the receiving space near the second side panel. Since the battery management system and the positive-electrode fuse and the negative-electrode fuse are arranged on two sides of the receiving space respectively, the fuses are located away from the battery management system. In this way, the electromagnetic interference, caused by the fuses, to the battery management system is reduced, and an impact, caused by heat generated by the fuses, on the battery management system is reduced.

### BRIEF DESCRIPTION OF THE DRAWINGS

FIG. 1 is a structural schematic view of a high voltage box according to some embodiments of the present disclosure.
FIG. 2 is a structural schematic view of an interior of the high voltage box according to some embodiments of the present disclosure.
FIG. 3 is a circuit diagram of a positive-electrode circuit and a negative-electrode circuit inside the high voltage box according to some embodiments of the present disclosure.
FIG. 4 is a structural schematic view of a portion of a battery management system according to some embodiments of the present disclosure.

Reference numerals: high voltage box: 100; box: 10; first side panel: 101; second side panel: 102; third side panel: 103; lift handle: 1031; switch handle: 1032; fourth side panel: 104; cover plate: 20; AC/DC power module: 301; battery management system: 302; disconnector switch: 303; positive-electrode relay: 304; positive-electrode fuse: 305; negative-electrode relay: 306; negative-electrode fuse: 307; shunt: 308; first temperature sensor: 309: second temperature sensor: 310; equalization relay: 311; pre-charge resistor: 312; high voltage wiring harness: 313; low voltage wiring harness: 314; 220v power wiring harness: 316; equalization connection wiring harness: 315; Hall current sensor: 317; heat dissipation sheet: 41, 42; fan: 50; seal ring: 60;
positive-electrode input interface: P+; negative-electrode input interface: P-; positive-electrode output interface: B+; negative-electrode output interface: B-; first region: A1; second region: A2; auxiliary power supply interface: J1; MBMU communication interface: J2; SBMU communication interface: J3; communication expansion interface: J4; slave-control power supply communication interface: J5; power indicator lamp: L1; fault indicator lamp: L2.

### DETAILED DESCRIPTION

In order to make the purpose, technical solutions and advantages of the present disclosure more clearly and understandable, the present disclosure will be described in further detail by referring to the accompanying drawings and embodiments. It is understood that the specific embodiments described herein are only for the purpose of explaining the present disclosure and are not intended to limit the present disclosure.

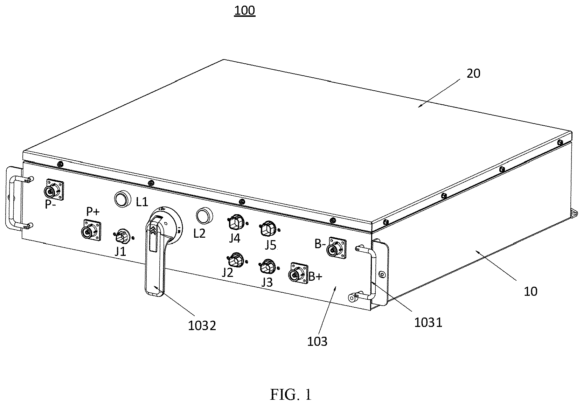

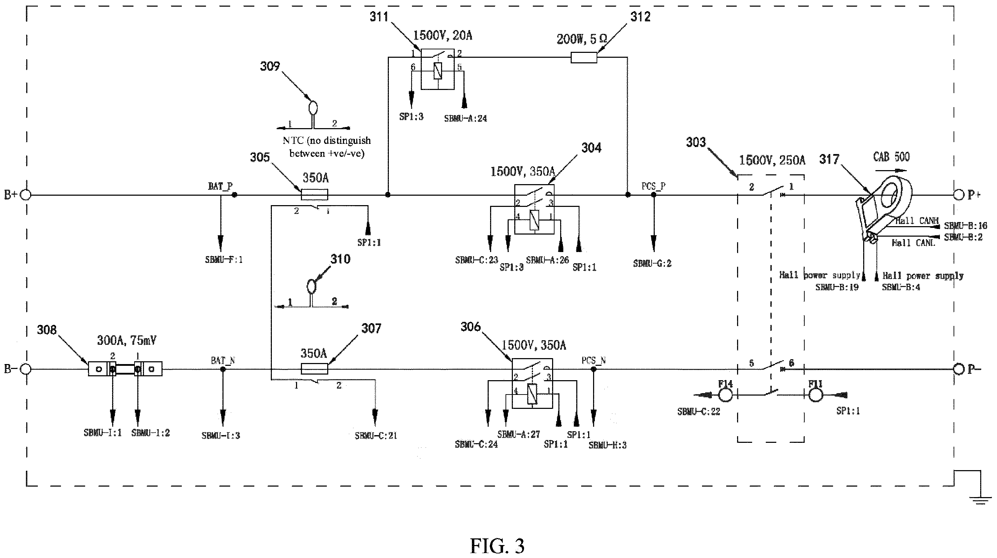

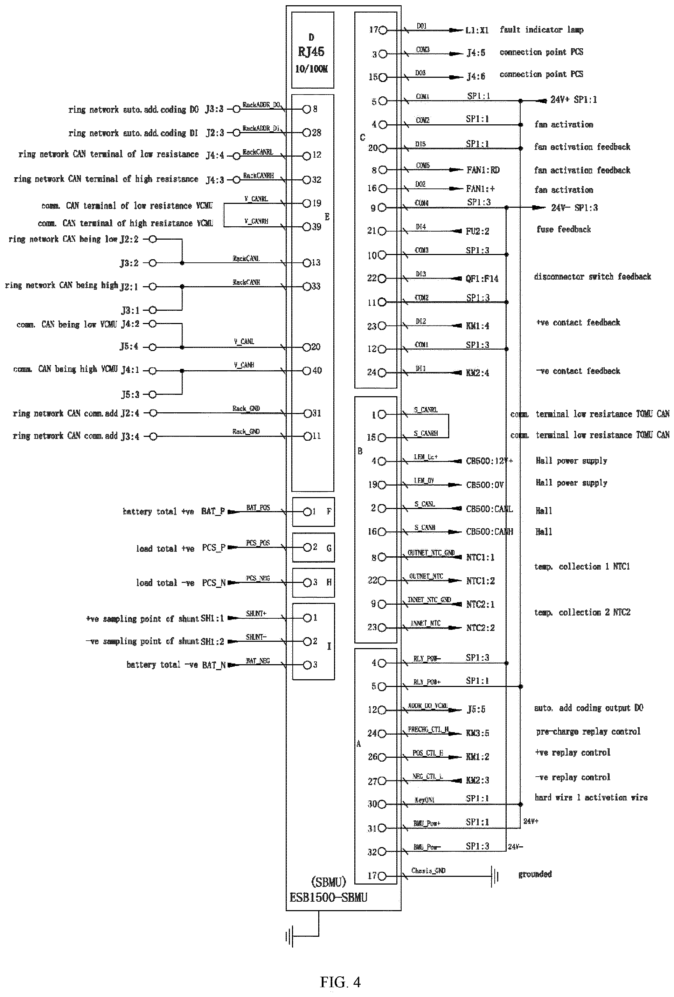

As shown in FIG. 1 to FIG. 4, FIG. 3 is a circuit diagram of a positive-electrode circuit and a negative-electrode circuit inside a high voltage box according to some embodiments of the present disclosure; and FIG. 4 is a structural schematic view of a portion of a battery management system according to some embodiments of the present disclosure. In FIG. 3 and FIG. 4, connection terminals connect various elements in FIG. 3 with corresponding pins in the battery management system in FIG. 4.

The present disclosure provides a high voltage box 100 including a box 10, a cover plate 20, and electrical elements received in a receiving space inside the box 10. A top of the box 10 defines an opening, and the cover plate 20 covers the opening of the box 10.

The box 10 includes a first side panel 101 and a second side panel 102 opposite to the first side panel 101. The receiving space is defined between the first side panel 101 and the second side panel 102. The electrical elements include a battery management system 302, a positive-electrode fuse 305 arranged on a positive-electrode circuit and/or a negative-electrode fuse 307 arranged on a negative-electrode circuit. In an implementation, each of the positive-electrode circuit and the negative-electrode circuit is arranged a respective one fuse. That is, the electrical elements include the positive-electrode fuse 305 and the negative-electrode fuse 307. Of course, in other implementations, the fuse may be omitted from the positive-electrode circuit and the negative-electrode circuit according to practical demands.

It is understood that the positive-electrode circuit refers to a circuit connected to a positive-electrode input interface and a positive-electrode output interface in the high voltage box. A positive-electrode voltage signal is input into the high voltage box through the positive-electrode input interface. The positive-electrode voltage signal is transmitted to the positive-electrode output interface through the positive-electrode circuit and is then output out of the high voltage box. The negative-electrode circuit refers to a circuit connected to a negative-electrode input interface and a negative-electrode output interface in the high voltage box. A negative-electrode voltage signal is input into the high voltage box through the negative-electrode input interface. The negative-electrode voltage signal is transmitted to the negative-electrode output interface through the negative-electrode circuit and is then output out of the high voltage box.

The battery management system 302 is located on a side of the receiving space near the first side panel 101. That is, the battery management system 302 is disposed near the first side panel 101. The battery management system 302, compared to the second side panel 102, is disposed nearer to the first side panel 101. For example, the battery management system 302 may be fixedly arranged on the first side panel 101. Alternatively, a small-sized gap is defined between the battery management system 302 and the first side panel 101. For example, the gap therebetween is less than 5 mm, such as 0 mm (i.e., the battery management system 302 is in contact with the first side panel 101), 2 mm, or 4 mm, and so on. The positive-electrode fuse 305 and the negative-electrode fuse 307 are located on a side of the receiving space near the second side panel 102. That is, the positive-electrode fuse 305 and the negative-electrode fuse 307 are disposed near the second side panel 102. The positive-electrode fuse 305 and the negative-electrode fuse 307, compared to the first side panel, are located nearer to the second side panel 102. For example, the positive-electrode fuse 305 and the negative-electrode fuse 307 may both be fixedly arranged on the second side panel 102. Alternatively, a distance from the second side panel 102 to each of the positive-electrode fuse 305 and the negative-electrode fuse 307 is small. To be noted that the positive-electrode fuse 305 and the negative-electrode fuse 307 may be disposed near the second side panel 102 but at different positions, according to demands. Therefore, since the battery management system 302 and the positive-electrode fuse 305 and the negative-electrode fuse 307 are disposed on two sides of the receiving space in the box 10, the positive-electrode fuse 305 and the negative-electrode fuse 307 are disposed away from the battery management system. In this way, electromagnetic interference, caused by the fuses, to the battery management system is reduced; and the impact, caused by heat generated by the fuses, on the battery management system is reduced.

In some embodiments, each of the distance between the battery management system 302 and the positive-electrode fuse 305 and the distance between the battery management system 302 and the negative-electrode fuse 307 is in a range of 200mm-280mm. For example, the distance between the battery management system 302 and the positive-electrode fuse 305 may be 210mm, 215mm, or 230m, and so on. The distance between the battery management system 302 and the negative-electrode fuse 307 may be 220mm, 250mm or 270mm, and so on. By arranging the battery management system 302 and the positive-electrode fuse 305 to have a large distance therebetween and arranging the battery management system 302 and the negative-electrode fuse 307 to have a large distance therebetween, the battery management system 302 is disposed away from the positive-electrode fuse 305 and the negative-electrode fuse 307, such that electromagnetic interference, caused by the fuses, to the battery management system 302 is reduced.

Further, the box 10 further includes a third side panel 103, a fourth side panel 104, and a bottom plate (not shown in the drawings). The first side panel 101, the third side panel 103, the second side panel 102, and the fourth side panel 104 are arranged in sequence and are connected to each other from end to end. Each of the first side panel 101, the third side panel 103, the second side panel 102, and the fourth side panel 104 is connected to a periphery of the bottom plate to cooperatively define the receiving space. The box 10 is a square box, such as a rectangular box or a cubic box.

In some embodiments, the first side panel 101, the fourth side panel 104, and the second side panel 102 may be integrally molded as a one-piece structure, and the one-piece structure is bent. The third side panel 103 is welded to the bent one-piece structure. That is, two ends of the third side panel 103 are respectively fixed, by welding, to the first side panel 101 and the second side panel 102.

A side of the third side panel 103 near the first side panel 101 is arranged with a positive-electrode input interface P+ and a negative-electrode input interface P-. A side of the third side panel 103 near the second side panel 102 is arranged with a positive-electrode output interface B+ and a negative-electrode output interface B-. For example, as shown in FIG. 1, the positive-electrode input interface P+ and the negative-electrode input interface P- are arranged on a left side of the third side panel 103; and the positive-electrode output interface B+ and the negative-electrode output interface B- are arranged on a right side of the third side panel 103.

The electrical elements further include an AC/DC power module 301, a disconnector switch 303, a positive-electrode relay 304, a negative-electrode relay 306, and a shunt 308. The positive-electrode input interface P+, the disconnector switch 303, the positive-electrode relay 304, the positive-electrode fuse 305, and the positive-electrode output interface B+ are connected to each other in sequence to form the positive-electrode circuit. The negative-electrode input interface P-, the disconnector switch 303, the negative-electrode relay 306, the negative-electrode fuse 307, the shunt 308, and the negative-electrode output interface B- are connected to each other in sequence to form the negative-electrode circuit. The battery management system 302 is connected to the AC/DC power supply module 301, the positive-electrode circuit and the negative-electrode circuit.

In some embodiments, the AC/DC power supply module 301 is mounted on the fourth side panel 104. The battery management system 302 is disposed at a corner between the first side panel 101 and the fourth side panel 104. The AC/DC power supply module 301 is disposed between the fourth side panel 104 and the battery management system 302. The positive-electrode fuse 305 and the positive-electrode output interface B+ are located along a same straight line. The negative-electrode fuse 307 and the negative-electrode output interface B- are located along a same straight line. In this way, connection between the elements is facilitated. The negative-electrode relay 306 is disposed between the battery management system 302 and the negative-electrode fuse 307 to space the battery management system 302 apart from the negative-electrode fuse 307. The positive-electrode fuse 305 is disposed adjacent to the first side panel 101. In this way, the positive-electrode fuse 305 and the negative-electrode fuse 307 are located as far away from the battery management system 302 as possible.

Further, the electrical elements further include a first temperature sensor 309 and a second temperature sensor 310, the first temperature sensor 309 and the second temperature sensor 310 are connected to the battery management system 302. The first temperature sensor 309 is disposed adjacent to the positive-electrode fuse 305. The second temperature sensor 310 is disposed adjacent to the negative-electrode fuse 307. In this way, temperatures of heat generating elements, such as the fuses, can be monitored via the first temperature sensor 309 and the second temperature sensor 310, preventing, once high temperatures are caused in the box, the high temperatures from being unable to be detected in time. In some embodiments, a distance between the first temperature sensor 309 and the positive-electrode fuse 305 is 18mm-22mm, such as 20mm. A distance between the second temperature sensor 310 and the negative-electrode fuse 307 is 18mm-22mm, such as 20mm.

The high voltage box 100 further includes a display module. The display module may be disposed on an outer surface of the first side panel 101 or on an outer surface of the cover plate 20. The display module is configured to display temperature data collected by the first temperature sensor 309 and the second temperature sensor 310.

In an embodiment, elements in the positive-electrode circuit and the negative-electrode circuit are connected to each other via a copper plate. The copper plate connecting the fuses to each other may be a copper plate having a large cross-sectional area, such that a heat dissipation area is increased. Specifically, a copper plate having a first cross-sectional area is arranged for each of: connection between the positive-electrode relay 304 and the positive-electrode fuse 305; connection between the positive-electrode fuse 305 and the positive-electrode output interface B+; connection between the negative-electrode relay 306 and the negative-electrode fuse 307; and connection between the negative-electrode fuse 307 and the shunt 308. The first cross-sectional area may be in a range of 2.5*40mm²-3.5*45mm², such as 3*35 mm². In other embodiments, the first cross-sectional area may be equal to other values, such as 3*38 mm² or 3*40 mm², and so on.

The copper plate at other locations, such as a copper plate connecting the disconnector switch 303 to the positive-electrode input interface P+ and the negative-electrode input interface P-, and a copper plate connected between the disconnector switch 303 and the positive-electrode relay 304, may be a copper plate having a smaller cross-sectional area, such as a copper plate having a cross-sectional area of 3*30 mm², such that an occupied space is reduced.

Further, the copper plate between the positive-electrode relay 304 and the positive-electrode fuse 305 is arranged with a heat dissipation sheet 41; and the copper plate between the negative-electrode relay 306 and the negative-electrode fuse 307 is arranged with a heat dissipation sheet 42. In this way, operating temperatures of the fuses are reduced. In some embodiments, the box 10 is further arranged with a fan 50, an air outlet surface of the fan 50 faces the heat dissipation sheet arranged on at least one of the copper plates. As shown in FIG. 3, the fan 50 is mounted on the second side panel 102, and the air outlet surface of the fan 50 faces the heat dissipation sheet 41 and the heat dissipation sheet 42. In this way, temperature rise of the fuses is further reduced, and a heat dissipation effect on the fuses is improved.

In an embodiment of the present disclosure, the electrical elements further include an equalization relay 311 and a pre-charge resistor 312. The equalization relay 311 and the pre-charge resistor 312 are connected to each other in series to form an equalization branch circuit. The equalization branch circuit is connected in parallel with the positive-electrode relay 304. A distance between the pre-charge resistor 312 and the battery management system 302 is in a range of 130mm-150mm, such as 135mm or 145mm, and so on. In this way, the pre-charge resistor 312 is enabled to be spaced apart from the battery management system 302, such that electromagnetic interference, caused by the pre-charge resistor 312, on the battery management system 302 is reduced, and an influence, caused by heat generated by the pre-charge resistor 312, on the battery management system 302 is reduced. By arranging the equalization branch circuit, a circulation problem between the battery clusters is alleviated.

The third side panel 103 is further arranged with an auxiliary power supply interface 11, a master battery management unit (MBMU) communication interface J2, a slave battery management unit (SBMU) communication interface J3, a communication expansion interface J4, a slave-control power supply communication interface J5, a power indicator lamp L1, a fault indicator lamp L2, a lift handle 1031, and a switch handle 1032, where the switch handle 1032 is connected to the disconnector switch 303.

Two lift handles 1031 are arranged. The two lift handles 1031 are respectively arranged on two side edges of the third side panel 103. The auxiliary power interface J1 is connected to the AC/DC power module 301 via a 220V power wiring harness 316. The communication expansion interface J4 is configured to connect to a resistor of an external terminal. In this way, a plurality of high voltage boxes in a cluster level may use the resistor of the external terminal in a compatible manner. The power indicator lamp L1 and the fault indicator lamp L2 are respectively located two sides of the switch handle 1032.

In an embodiment of the present disclosure, the electrical elements further include a Hall current sensor 317. The Hall current sensor 317 is connected between the positive-electrode input interface P+ and the disconnector switch 303, such that current detection is achieved.

In an embodiment of the present disclosure, the connecting harness connects the battery management system 302 to the AC/DC power supply module 301, the positive-electrode circuit, and the negative-electrode circuit, and the connecting harness includes a high voltage wiring harness 313 and a low voltage wiring harness 314. The high voltage wiring harness 313 and the low voltage wiring harness 314 are independent of each other. That is, the high voltage wiring harness 313 and the low voltage wiring harness 314 are separated from each other and are led out independently from each other. In this way, mutual interference the high voltage wiring harness 313 and the low voltage wiring harness 314 is prevented, and safety is improved. Further, an insulating layer may be arranged to wrap around an outer surface of the high voltage wiring harness 313 to further improve insulation safety.

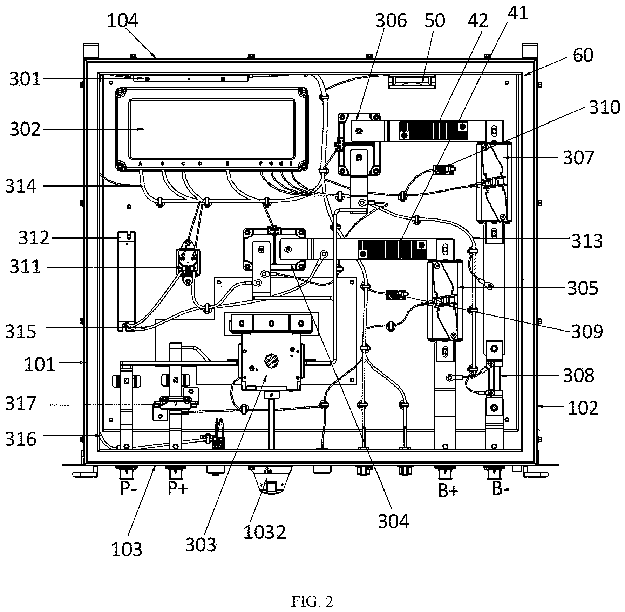

As shown in FIG. 2, the battery management system 302 is connected, via the low voltage wiring harness 314, to the AD/DC power module 301, the disconnector switch 303, the first temperature sensor 309, the second temperature sensor 310, the positive-electrode relay 304, the positive-electrode fuse 305, the negative-electrode relay 306, the negative-electrode fuse 307, the fan 50, the equalization relay 311, and the Hall current sensor 317, the fault indicator lamp L1, the MBMU communication interface J2, the SBMU communication interface J3, the communication expansion interface J4, and the slave-control power supply communication interface J5. The battery management system 302 is further connected, via the high voltage wiring harness 313, to the copper plate between the disconnector switch 303 and the positive-electrode relay 304, the copper plate between the disconnector switch 303 and the negative-electrode relay 306, the copper plate between the negative-electrode fuse 307 and the shunt 308, the shunt, the copper plate between the positive-electrode fuse 305 and the positive-electrode output interface B+. The battery management system 302 performs voltage acquisition through the high voltage wiring harness 313, and the voltage acquisition is performed at single point, such that reliability of acquisition results is improved.

The equalization connection wiring harness 315 in the equalization branch circuit is separated from other wiring harnesses, for example, the high voltage wiring harness 313, the low voltage wiring harness 314, and equalization connection wiring harness 315 are independent from each other.

As shown in FIGS. 3 and 4, FIG. 3 shows some of pin connections between the elements in the positive-electrode circuit and the negative-electrode circuit to the battery management system 302. For example, SBMU-1: 1 of the shunt 308 shown in FIG. 3 is a positive-electrode sampling point of the shunt; and SBMU-1: 2 of the shunt 308 shown in FIG. 3 is a negative-electrode sampling point of the shunt. The SBMU-1: 1 of the shunt 308 is connected to a SH1: 1 pin of the battery management system 302 shown in FIG. 4, and the SBMU-1: 2 of the shunt 308 is connected to a SH1: 2 pin of the battery management system 302 shown in FIG. 4. SBMU1: 3 of a BAT_N node shown in FIG. 3 is connected to a battery total negative pin BAT_N shown in FIG. 4. SBMU-F: 1 of a BAT_P node shown in FIG. 3 is connected to a battery total positive pin BAT_P shown in FIG. 4. Connection relating to other elements can be determined based on corresponding pin names shown in FIG. 3 and FIG. 4, which will not be described in detail here.

In an embodiment of the present disclosure, a seal ring 60 is disposed between the cover plate 20 and the box 10, such that the entire high voltage box 100 meets the protection level of IP65. End faces of the first side panel, the second side panel, the third side panel, and the fourth side panel away from the bottom plate have an extension portion being bent towards the receiving space. The seal ring 60 is arranged on the extension portion.

Various technical features of the above embodiments can be combined to each other in any way. In order to provide concise description, not all possible combinations of the various technical features in the above embodiments are described. However, as long as no contradiction is caused, any combination thereof shall be considered to be within the scope of the present disclosure.

The above-described embodiments express only several embodiments of the present disclosure, which are described in a more specific and detailed manner. However, the description shall not be interpreted as a limitation of the scope of the present disclosure. It should be pointed out that any ordinary skilled person in the art may perform various deformations and improvements without departing from the concept of the present disclosure, and the deformations and improvements shall fall within the scope of the present disclosure. Therefore, the scope of the present disclosure shall be subject to the appended set of claims.

## Claims

1. A high voltage box, comprising: a box (10), a cover plate (20), and electrical elements received in a receiving space inside the box (10); wherein, a top of the box (10) defines an opening, and the cover plate (20) covers the opening of the box (10); and
wherein, the box (10) comprises a first side panel (101) and a second side panel (102) opposite to the first side panel (101); the receiving space is defined between the first side panel (101) and the second side panel (102); the electrical elements comprise a battery management system (302), a positive-electrode fuse (305) arranged on a positive-electrode circuit and/or a negative-electrode fuse (307) arranged on a negative-electrode circuit; and
the battery management system (302) is located on a side of the receiving space near the first side panel (101); the positive-electrode fuse (305) and/or the negative-electrode fuse (307) is located on another side of the receiving space near the second side panel (102).

2. The high voltage box according to claim 1, wherein, a distance between the battery management system (302) and the positive-electrode fuse (305) is in a range of 200mm-280mm; and/or a distance between the battery management system (302) and the negative-electrode fuse (307) is in a range of 200mm-280mm.

3. The high voltage box according to claim 1, wherein, the electrical elements comprise both the positive-electrode fuse (305) and the negative-electrode fuse (307); the box (10) further comprises a third side panel (103), a fourth side panel (104), and a bottom plate; the first side panel (101), the third side panel (103), the second side panel (102), and the fourth side panel (104) are arranged in sequence and are connected to each other from end to end; each of the first side panel (101), the third side panel (103), the second side panel (102), and the fourth side panel (104) is connected to a periphery of the bottom plate to cooperatively define the receiving space;
a side of the third side panel (103) near the first side panel (101) is arranged with a positive-electrode input interface (P+) and a negative-electrode input interface (P-); the electrical elements further comprise an AC/DC power module (301), an equalization relay (311), a pre-charge resistor (312), a disconnector switch (303), a positive-electrode relay (304), a negative-electrode relay (306), and a shunt (308); the positive-electrode input interface (P+), the disconnector switch (303), the positive-electrode relay (304), the positive-electrode fuse (305), and the positive-electrode output interface (B+) are connected to each other in sequence to form the positive-electrode circuit; the negative-electrode input interface (P-), the disconnector switch (303), the negative-electrode relay (306), the negative-electrode fuse (307), the shunt (308), and the negative-electrode output interface (B-) are connected to each other in sequence to form the negative-electrode circuit; the equalization relay (311) and the pre-charge resistor (312) are connected to each other in series to form an equalization branch circuit, the equalization branch circuit is connected in parallel with the positive-electrode relay (304); the battery management system (302) is connected to the AC/DC power supply module, the positive-electrode circuit, and the negative-electrode circuit.

4. The high voltage box according to claim 3, wherein, the box (10) is a square box; the battery management system (302) is disposed at a corner between the first side panel (101) and the fourth side panel (104); the AC/DC power supply module is disposed between the fourth side panel (104) and the battery management system (302); the positive-electrode fuse (305) and the positive-electrode output interface (B+) are located along a same straight line; and the negative-electrode fuse (307) and the negative-electrode output interface (B-) are located along a same straight line.

5. The high voltage box according to claim 3, wherein, the first side panel (101), the fourth side panel (104), and the second side panel (102) are integrally molded as a bent one-piece structure; the third side panel (103) is welded to the bent one-piece structure; and a seal ring is disposed between the cover plate (20) and the box (10).

6. The high voltage box according to claim 1, wherein, the electrical elements further comprise a first temperature sensor (309) and a second temperature sensor (310); the first temperature sensor (309) is disposed adjacent to the positive-electrode fuse (305); and the second temperature sensor (310) is disposed adjacent to the negative-electrode fuse (307).

7. The high voltage box according to claim 6, wherein, a distance between the first temperature sensor (309) and the positive-electrode fuse (305) is in a range of 18mm-22mm; and a distance between the second temperature sensor (310) and the negative-electrode fuse (307) is in a range of 18mm-22mm.

8. The high voltage box according to claim 3, wherein, a copper plate having a first cross-sectional area is arranged for each of: connection between the positive-electrode relay (304) and the positive-electrode fuse (305); connection between the positive-electrode fuse (305) and the positive-electrode output interface (B+); connection between the negative-electrode relay (306) and the negative-electrode fuse (307); and connection between the negative-electrode fuse (307) and the shunt (308); and the first cross-sectional area is in a range of 2.5*40mm²-3.5*45mm².

9. The high voltage box according to claim 3, wherein,
a copper plate connects the disconnector switch (303) to the positive-electrode input interface (P+) and the negative-electrode input interface (P-) and has a cross-sectional area of 3*30 mm²; and
another copper plate is connected between the disconnector switch (303) and the positive-electrode relay (304) and has a cross-sectional area of 3*30 mm².

10. The high voltage box according to claim 9, wherein, a copper plate connects the disconnector switch (303) to the positive-electrode input interface (P+) and the negative-electrode input interface (P-) and has a second cross-sectional area; and
another copper plate is connected between the disconnector switch (303) and the positive-electrode relay (304) and has another second cross-sectional area; and
each of the second cross-sectional area and the another second cross-sectional area is less than the first cross-sectional area.

11. The high voltage box according to claim 3, wherein, a copper plate between the positive-electrode relay (304) and the positive-electrode fuse (305) is arranged with a heat dissipation sheet (41); and a copper plate between the negative-electrode relay (306) and the negative-electrode fuse (307) is arranged with another heat dissipation sheet (42).

12. The high voltage box according to claim 11, wherein, the box (10) is further arranged with a fan (50), an air outlet surface of the fan (50) faces at least one of: the heat dissipation sheet (41) and the another heat dissipation sheet (42), arranged on the respective copper plate.

13. The high voltage box according to claim 3, wherein, a connecting harness connects the battery management system (302) to the AC/DC power supply module, the positive-electrode circuit, and the negative-electrode circuit; the connecting harness comprises a high voltage wiring harness (313) and a low voltage wiring harness (314); the high voltage wiring harness (313) and the low voltage wiring harness (314) are independent of each other; and an insulating layer is arranged to wrap around an outer surface of the high voltage wiring harness (313).

14. The high voltage box according to claim 3, wherein, the third side panel (103) is further arranged with an auxiliary power supply interface, a communication expansion interface, a slave-control power supply communication interface, a master battery management unit communication interface, a slave battery management unit communication interface, a power indicator lamp, a fault indicator lamp, a lift handle, and a switch handle, wherein the switch handle is connected to the disconnector switch (303).

15. The high voltage box according to claim 3, wherein, the pre-charge resistor (312) is disposed spaced apart from the battery management system (302); and a distance between the pre-charge resistor (312) and the battery management system (302) is in a range of 130mm-150mm.
